# EUROPÄISCHE PATENTSCHRIFT

(11) **EP 3 511 687 B1**
(45) Veröffentlichungstag und Bekanntmachung des Hinweises auf die Patenterteilung: **10.03.2021**
(21) Anmeldenummer: 19150336.6
(22) Anmeldetag: 04.01.2019
(51) Int. Cl.: G01K 7/02, C04B 35/563

(54) **KERAMISCHES THERMOELEMENT SOWIE VERFAHREN ZU SEINER HERSTELLUNG**
CERAMIC THERMAL ELEMENT AND METHOD FOR PRODUCING SAME
ÉLÉMENT THERMIQUE CÉRAMIQUE AINSI QUE SON PROCÉDÉ DE FABRICATION

(30) Priorität: 15.01.2018 DE 102018200548
(43) Veröffentlichungstag der Anmeldung: 17.07.2019
(73) Patentinhaber: FRAUNHOFER-GESELLSCHAFT zur Förderung der angewandten Forschung e.V., 80686 München (DE)
(72) Erfinder: Martin, Hans-Peter, 01705 Freital (DE); Feng, Bing, 01277 Dresden (DE); Rebenklau, Lars, 01279 Dresden (DE); Gierth, Paul, 01307 Dresden (DE)
(74) Vertreter: Pfenning, Meinig & Partner mbB

(56) Entgegenhaltungen:
- JP-A- 2016 133 369
- K.-F CAI ET AL: "Effect of titanium carbide addition on the thermoelectric properties of B4C ceramics", SOLID STATE COMMUNICATIONS, Bd. 115, Nr. 10, 1. Juli 2000 (2000-07-01) , Seiten 523-526, XP055573725, GB ISSN: 0038-1098, DOI: 10.1016/S0038-1098(00)00245-3

## Beschreibung

Die Erfindung betrifft ein keramisches Thermoelement, welches als Temperatursensor dienen kann, sowie ein Verfahren zu seiner Herstellung. Die erfindungsgemäßen Thermoelemente können insbesondere für die Messung von Temperaturen und dabei auch Temperaturen oberhalb 1500 °C, bevorzugt oberhalb 1800 °C mit ausreichender Genauigkeit und Lebensdauer eingesetzt werden.

Die genaue Temperaturerfassung bei sehr hohen Temperaturen mit Einschränkungen für optische Temperaturmessung ist bisher nicht befriedigend gelöst. Wenn Pyrometer wegen visueller Hindernisse (konstruktiver Aufbau, Rauchgase, Kondensate, Schichtbildung) oder aus Kostengründen nicht nutzbar sind, gibt es zur Temperaturerfassung für T > 1800 °C keine technisch ausgereifte Lösung. Thermoelemente auf Basis W-Re (Typ C, ASTM E 988) sind nur kurzzeitig einsetzbar und sehr kostenintensiv. Andere Temperatursensoren außer Pyrometern sind nicht verfügbar.

Der bekannte Stand der Technik zur Messung sehr hoher Temperaturen stellt die Temperaturmessung mit Strahlungspyrometern in den Mittelpunkt. Dies ist eine sehr zuverlässige und weit verbreitete Methode um Temperaturen bis zu 3000 °C zu messen. Voraussetzung für die exakte Temperaturmessung ist die Kenntnis der Emissionskoeffizienten der Messobjekte und ein störungsfreier optischer Zugang zur Messstelle. In vielen technischen Prozessen sind diese Bedingungen aber nicht ausreichend gegeben. Entweder ist die Datensituation für konkrete Prozesse hinsichtlich der Emissionsverhältnisse nicht ausreichend oder es kommt zu nicht vorhersehbaren Veränderungen der Emissionsverhältnisse während der Messungen oder der optische Zugang wird durch die Entstehung von Reaktionsprodukten in der Prozessumgebung bzw. optische Blockierung durch Ablagerungen am Sichtfenster so stark behindert, dass die Messung ungenau oder unmöglich wird. Ebenso ist ein hochwertiges Pyrometersystem sehr kostenintensiv, so dass aus betriebswirtschaftlichen Gründen nur die absolut notwendige Anzahl solcher Systeme eingesetzt wird.

Thermoelemente dienen seit vielen Jahren als sehr kostengünstige und als ausreichend genaue Temperatursensoren. Für Temperaturmessungen mit T> 1000 °C sind sie die bevorzugten Sensoren in der Industrie. Bis 1800 °C sind technisch ausgereifte Thermoelemente (Typ S, Typ B, Typ R, DIN EN 60584-1) verfügbar. Temperaturen bis 2400 °C können mit W-Re-Thermoelementen (Typ C, ASTM E 988) gemessen werden, die allerdings einer extrem schnellen Alterung unterliegen und deshalb bereits nach wenigen Einsätzen gewechselt werden müssen, wenn weiterhin eine zuverlässige Temperaturerfassung erfolgen soll. Da W-Re-Thermoelemente auch sehr kostenintensiv in der Beschaffung sind (ca. 500 Euro für 500 mm TE-Länge), werden diese nur in Ausnahmefällen eingesetzt.

Deshalb wurde bereits in den 90er Jahren ein keramisches Thermoelement auf Basis von Borcarbid-Graphit entwickelt und erfolgreich in der Hochtemperaturtechnik eingesetzt. Beispiele dazu gehen aus US 4,732,620 B hervor. Die Nachteile dieser Thermoelemente liegen darin, dass sie eine sehr große thermische Eigenmasse in das Messsystem einbringen und deshalb hinsichtlich des Messfehlers und der Ansprechzeit deutlich hinter den klassischen Thermoelementen liegen. Zusätzlich tendiert die Borcarbid - Graphit-Kombination dazu bei den sehr hohen Messtemperaturen über Diffusion einer stofflichen Veränderung der Einzelkomponenten zu unterliegen, was zu einer Verschiebung des Messsignals führt. Für Temperaturmessungen über 2000 °C ist das ein prinzipielles physikalisches Problem für alle Thermoelemente, da die Diffusionskoeffizienten größer werden und bereits geringfügige Veränderungen zu einer sensorisch relevanten Änderung führen.

So ist aus JP 2016 133369 A eine Thermoelement bekannt, bei dem keramische Werkstoffe eingesetzt werden.

Von K.-F. Cai sind in "Effect of titanium carbide addition on the thermoelectric properties of B4C ceramics", Solid State Communications; Bd. 115, Nr. 10, 1. Juli 200, S. 523-526; XP055573725, GB; ISSN: 0038-1098, DOI: 10.1016/S0038-1098(00)00245-3 Kompositkeramiken beschrieben, thermoelektrische Eigenschaften aufweisen.

Es ist daher Aufgabe der Erfindung, Thermoelemente zur Verfügung zu stellen, die auch bei sehr hohen Temperaturen über einen ausreichend großen Zeitraum eine ausreichend hohe Messgenauigkeit erreichen.

Erfindungsgemäß wird diese Aufgabe mit einem thermoelektrischen Element, das die Merkmale des Anspruchs 1 aufweist, gelöst. Anspruch 6 definiert ein Herstellungsverfahren. Vorteilhafte Ausgestaltungen und Weiterbildungen der Erfindung können mit in untergeordneten Ansprüchen bezeichneten Merkmalen realisiert werden.

Das erfindungsgemäße thermoelektrische Element ist mit zwei aus jeweils einer unterschiedlichen Werkstoffzusammensetzung gebildeten ersten und zweiten Bereichen oder Thermoschenkeln, die elektrisch miteinander verbunden und an ein Messgerät, das zur Messung der elektrischen Spannungsdifferenz, die infolge des Seebeck-Effektes hervorgerufen ist, ausgebildet ist, anschließbar.

Die beiden Bereiche oder Thermoschenkel sind jeweils aus einem Borcarbid-Metallcarbid- oder Borcarbid-Metallborid-Kompositwerktstoff gebildet. Dabei unterscheiden sich das Metallcarbid bzw. Metallborid in mindestens einem Bereich in den Bereichen oder Thermoschenkeln. Das Metallcarbid oder Metallborid soll mit einem Anteil enthalten sein, der maximal um 20 Masse-% kleiner ist als der Anteil bei dem Perkolation für das Metallcarbid bzw. Metallborid erreichbar ist. Bevorzugt soll dieser Anteil kleiner als 5 Masse-% sein.

Ein Carbid oder Borid bildendes Metall kann dazu ausgewählt sein aus Hafnium, Tantal, Titan, Wolfram, Zirkonium, Niobium, Molybdän, Vanadium, Silicium, Bor und Chrom.

Sich nach einer Sinterung ergebende Werkstoffkomposite für Bereiche oder Thermoschenkel kann ein hinsichtlich der chemischen Thermodynamik stabiles System bis zu Temperaturen von mindestens 2000°C erhalten werden.

Die jeweiligen Seebeckkoeffizienten der Werkstoffe, mit denen die beiden Bereiche oder Thermoschenkel gebildet sind, sollten sich um mindestens 5% des Absolutwertes voneinander unterscheiden. Dadurch kann eine hohe elektrische Differenzspannung größer 100 mV bei Temperaturen > 1000°C und einer Temperaturdifferenz zwischen Messstelle und Referenzstelle von 100 K generiert werden.

Die Masseanteile eines im ersten und im zweiten Bereich oder Thermoschenkels enthaltenen Carbides oder Metallcarbides im jeweiligen Kompositwerkstoff sollten sich um maximal 20 Masse-%, bevorzugt um 5 Masse-% voneinander unterscheiden. Der angegebene Unterschied bezieht sich immer auf eine Verbindung des Kompositwerkstoffs. Ist in einem Bereich beispielsweise ein Anteil von 30 Masse-% Hafniumborid enthalten, solte in dem zweiten Bereich minimal ein Anteil von 10 Masse-% und maximal ein Anteil von 50 Masse-% Hafniumborid enthalten sein.

Die elektrisch leitende Verbindung zwischen den zwei Bereichen oder Thermoschenkeln kann mit einer stoffschlüssigen Verbindung der Werkstoffe, mit denen die Bereiche oder Thermoschenkel gebildet sind, gebildet sein.

Das Carbid/Carbid bzw. Carbid/Borid Komposit sollte bis zu einer Temperatur von mindestens 2200°C thermodynamisch stabil sein und keine chemischen Reaktionen im Stoffsystem sowie ggf. mit dem Werkstoff eines Trägers oder Substrats, auf dem das Thermoelement angeordnet ist, zulassen. Eine höhere Temperatur der thermodynamischen Stabilität ist immer vorteilhaft und anzustreben. Deshalb werden Stoffsysteme mit möglichst hoher Temperaturstabilität bevorzugt. Solche Stoffsysteme sind vorzugsweise:
Borcarbid basierte Systeme mit B₄C oder borreichen Borcarbiden (BₓC mit x= 5, 6, 7, 8, 9, 10) in Kombination mit einem oder mehreren Refraktärcarbiden bzw. -boriden oder -carboboriden der chemischen Elemente:
Hf, Ta, Ti, W, Zr, Nb, Mo, V, Cr, Si.

Die elektrisch leitende Verbindung zwischen den zwei Bereichen oder Thermoschenkeln soll aus dem gleichen Werkstoff wie das eigentliche Thermoelement gebildet sein. Zusätzlich kann freier, d.h. chemisch nicht mit einem anderen Element gebundener, Kohlenstoff reaktiv bei einer thermischen Behandlung, insbesondere einer Sinterung gebildet werden, wenn freier Kohlenstoff infolge des thermodynamischen Gleichgewichts gebildet werden kann. Der Gehalt an freiem Kohlenstoff im Werkstoff eines Bereichs oder Thermoschenkels sollte jedoch bei < 10 Masse% gehalten sein. Ebenso kann über den bei einer thermischen Behandlung temporär gebildeten Kohlenstoff, während der Sinterung in situ ein Carbid im Kompositwerkstoff der Bereiche oder Thermoschenkel gebildet werden, so dass dadurch der Gesamtgehalt des freien Kohlenstoffs abgesenkt werden kann. Auch kann durch chemische Reaktion zwischen dem vorhandenen Carbid und dem Borid ein Carboborid entstehen, wenn dieses thermodynamisch begünstigt ist.

Bei der Herstellung kann so vorgegangen werden, dass zur Ausbildung eines ersten Bereichs oder eines Thermoschenkels ein Pulvergemisch bestehend aus Borcarbid und einem weiteren Metallcarbid oder einem Borcarbid und einem Metallborid mit vorgegebenen Anteilen der zwei den jeweiligen Kompositwerkstoff bildenden chemischen Verbindungen und ein zweiter Bereich oder Thermoschenkel ein Pulvergemisch bestehend aus Borcarbid und einem weiteren Metallcarbid oder einem Borcarbid und einem Metallborid mit vorgegebenen und von den für die Ausbildung des ersten Bereichs oder Thermoschenkels abweichenden Anteilen der zwei den jeweiligen Kompositwerkstoff bildenden chemischen Verbindungen bei einer thermischen Behandlung gesintert und dabei in einem Verbindungsbereich elektrisch leitend miteinander verbunden werden.

Der jeweilige Kompositwerkstoff, mit dem ein erster oder zweiter Bereich oder Thermoschenkel ausgebildet wird, kann durch gemeinsames Mahlen von Borcarbid mit einem weiteren Metallcarbid oder einem Metallborid vor einem anschließendem Auftrag auf ein Substrat oder einer Formgebung mit nachfolgender thermischer Behandlung erhalten werden.

Die jeweiligen Pulvergemische können zu einem Presskörper geformt dann einzeln und später zur Ausbildung einer stoffschlüssigen Verbindung zwischen dem einen ersten Bereich und einen zweiten Bereich bzw. die zwei Thermoschenkel bildenden Presskörpern gemeinsam bei einer thermischen Behandlung gesintert werden. Die Sinterung sollte so durchgeführt werden, dass ein möglichst dichter Sinterkörper mit den zwei Bereichen erhalten wird.

Die beiden Pulvermischungen können aber auch auf ein Substrat zur Ausbildung zweier Thermoschenkel aufgebracht und dann die thermische Behandlung, die zu einer Sinterung führt durchgeführt werden. Das Aufbringen kann beispielsweise durch lokal definiertes Aufdrucken einer Paste oder Suspension erreicht werden. Als Substratwerkstoff sollte ein Werkstoff gewählt werden, der auch bei Temperaturen oberhalb der Einsatztemperatur eines Thermoelements stabil ist.

Bei der thermischen Behandlung kann eine chemische Umwandlung eines Metallcarbids in ein entsprechendes Metallborid oder Metallcarboborid erreicht werden, wodurch sich eine thermodynamisch stabile Variante eines Werkstoffs für zumindest einen Bereich oder einen Thermoschenkel bildet. Das gebildete Metallborid oder Metallcarboborid kann also Bestandteil eines Werkstoffkomposits werden.

So kann beispielsweise ein Umwandlung von Hafnium-, Tantal- Titancarbid in ein entsprechendes Borid erfolgen und mit dem Borcarbid ein Werkstoffkomposit gebildet werden, mit dem ein erster und/oder ein zweiter Bereich oder Thermoschenkel ausgebildet werden kann. Durch diese Reaktion kann Kohlenstoff aus dem an der Reaktion beteiligten Borcarbid frei gesetzt werden. Dieser verbleibt als chemisch nicht an ein anderes Element gebundener freier Kohlenstoff im Kompositwerkstoff oder er reagiert mit eventuell vorhandenen Sauerstoffverunreinigungen der Partikeloberflächen zu CO und entweicht als Gas aus dem Werkstoff.

Mit dem Mahlen sollte eine vorgegebene Partikelgrößenverteilung des jeweiligen gemahlenen pulverförmigen Kompositwerkstoffs erhalten werden. So kann beispielsweise eine Partikelgrößenverteilung eingesetzt werden, die Partikel mit folgenden Größen enthält: d₉₀-Wert < 4 µm, d₅₀-Wert < 2 µm und d₁₀-Wert > 0,1 µm. Die Verteilung der Partikelgrößen ist für die Sinterfähigkeit der Pulver, die Diffusionsneigung und für das Perkolationsverhalten der Einzelkomponenten des Komposits von Bedeutung. Es ist nicht erforderlich eine bestimmte Korngrößenverteilung einzustellen. Zur Absicherung der Sinterfähigkeit sind Partikelgrößen der Ausgangspulver d₅₀< 4 µm erforderlich. Die Prozessierbarkeit der Pulver gestaltet sich günstiger, wenn der d₅₀ > 0,1 µm ist. Die Breite der jeweiligen Einzelfraktionen der Kompositkomponenten sollte möglichst eng sein, d.h. ein Größenbereich < 10 µm ist vorteilhaft. Die Einzelfraktionen können durchaus hinsichtlich ihrer Partikelgrößenverteilungsparamter voneinander innerhalb der vorher angegebenen Grenzen abweichen aber auch einander sehr ähnlich sein. Über die Partikelgrößenverteilungsparameter kann das Perkolationsverhalten im Komposit beeinflusst werden, so dass sich über die Gestaltung der Partikelgrößenverteilung auch die erforderliche Zusammensetzung des Komposits hinsichtlich der Seebeckkoeffizientendifferenzen beeinflussen lässt.

Die Lösung für die beschriebene Problemstellung beruht also auf der nicht leicht zugänglichen Kombination von bei extrem hohen Temperaturen diffusionsstabilen Stoffsystemen zur Herstellung eines Thermoelements, die sich bezüglich ihrer sensorisch relevanten Seebeckkoeffizienten ausreichend stark unterscheiden, um ein technisch auswertbares Messsignal zu liefern. Diese Voraussetzungen hinsichtlich thermischer Stabilität und Messsignalstärke wurden bereits mit dem Borcarbid - Graphit Thermoelement erfüllt. Allerdings waren die konstruktive Gestaltung und die Langzeitstabilität dieser technischen Lösung wenig vorteilhaft in der praktischen Nutzung. Die Parameter Korngröße, Konzentrationsunterschiede der Einzelkomposite und Diffusionskoeffizient der Einzelkomponenten mit dem Ziel eines diffusionsstabilen und chemisch stabilen Stoffsystems sollten in der Gesamtheit für eine technisch nutzbaren Lösung berücksichtigt werden.

Mit der vorliegenden Erfindung wird die konstruktive Gestaltungsmöglichkeit durch die Nutzung mechanisch stabiler keramischer Werkstoffe dahingehend erweitert, dass sehr dünne Thermoelementkomponenten herstellbar werden, womit die Sensorfunktion unterstützt und die Wechselwirkung zum Messobjekt minimiert wird. Der Durchmesser eines kompletten Thermoelements kann bei 2 mm oder mehr liegen, Längen von mehr als 1 m können mit dem beschriebenen Werkstoffkonzept umgesetzt werden.
Ein wesentlicher Punkt für die Langzeitstabilität ist der, dass mit stofflich nahezu identischen Thermoelementkomponenten gearbeitet wird. Diese weisen wegen der stofflichen Ähnlichkeit nur eine sehr geringe Diffusionsgeschwindigkeit auf (j(r) = - D · Vc(r) Konzentrationsunterschied, Vc, ist ein wesentlicher Faktor für den Stoffstrom durch Diffusion, j(r).

Wird zusätzlich ein Stoffsystem mit einem niedrigen Diffusionskoeffizienten D gewählt, kann eine herausragende Stabilität des Stoffsystems erwartet werden. Niedrige Diffusionskoeffizienten liegen auch bei hohen Temperaturen für die Borcarbide und Refraktärcarbide bzw. Refraktärboride vor. Mit der vorgeschlagenen Lösung gelingt es trotz des geringen Konzentrationsunterschieds bei der chemischen Zusammensetzung der Bereiche des Thermoelements zur Minimierung von Vc einen sehr hohen Unterschied der für das Messsignal entscheidenden Seebeckkoeffizienten sicherzustellen. Durch die Nutzung von Borcarbid-Metallcarbid- bzw. Metallborid Kompositwerkstoffen kann der Effekt eines funktionellen Halbleiters (Borcarbid) und eines funktionellen metallischen Leiters (Metallcarbid bzw. -borid) im Bereich der Perkolation für diesen Zweck genutzt werden. Perkolation nennt man den Zusammensetzungsbereich bei der die in einem Kompositwerkstoff in geringerer Menge enthaltene Komponente zu einem geschlossenen Netzwerk im Werkstoff zusammenfindet. Der Übergang vom Netzwerk zu voneinander isolierten Partikeln dieser Komponente erfolgt in einem sehr engen Bereich von wenigen Masseprozent. So kann ein Komposit aus Borcarbid mit 20 Masse-% TiB₂ thermoelektrisch weitgehend dem Borcarbid entsprechen. Wohingegen ein Komposit aus Borcarbid mit 21 Masse-% TiB₂ thermoelektrisch vom Titanborid dominiert wird, da es ein Netzwerk bildet, welches die elektrischen Leitungsvorgänge infolge der um mehrere Größenordnungen höheren elektrischen Leitfähigkeit bestimmt. Damit unterliegt im Perkolationsbereich auch der mit der elektrischen Leitfähigkeit gekoppelte Seebeckkoeffizient einem Sprung und die Beispielkompositwerkstoffe weisen eine sehr große Seebeckkoeffizienten-Differenz auf. Borcarbid kann einen Seebeckkoeffizienten von 300 µV/K aufweisen, Titandiborid verfügt über einen Seebeckkoeffizienten bei ca. 5 µV/K. Diese Differenz führt zu einem hervorragend auswertbaren Messsignal für die Temperaturmessung entsprechend den bekannten Prinzipien eines Thermoelements.

Ein wichtiger Aspekt der Erfindung ist die Herstellung geeigneter Borcarbid-Komposite mit ausreichender thermischer Stabilität und deren Kombination in einem thermoelektrisch wirksamen Werkstoffverbund. Dabei können die Werkstoffparameter der Werkstoffkomposite wie thermische Ausdehnung, chemische Wechselwirkung, Seebeckkoeffizient und thermische Belastbarkeit betrachtet werden. Die Perkolation kann untersucht und die technischen Einflussparameter auf die Perkolation können berücksichtigt werden. Über die Beachtung der Perkolation kann ein Thermoelement Werkstoffpaar als Kompositwerkstoff erhalten werden, dessen Bestandteile stofflich sehr nah beieinander und hinsichtlich der thermoelektrischen Parameter sehr weit voneinander liegen. Damit kann eine hohe Zuverlässigkeit und thermische Stabilität des thermoelektrischen Elements erreicht werden.

Der wichtigste Vorteil ist das sehr hohe und gut auswertbare Messsignal durch die starke Differenz der Seebeckkoeffizienten der zwei Bereich bzw. Thermoschenkel und der gleichzeitig stofflichen Nähe, womit eine stark verminderte Diffusionsneigung einhergeht. Beide Aspekte können das Messsignal auch bei einer sehr hohen thermischen Belastung so stabil halten, so dass eine genaue Temperaturerfassung über einen langen Zeitraum gewährleistet ist. (hohes Messsignal + geringe Veränderung durch Diffusion = minimaler Effekt durch stoffliche Veränderungen der Thermoschenkel/ niedriger prozentualer Fehler des Messwerts) Durch die zweite Maßnahme wird die Langzeitstabilität und die Zuverlässigkeit des Messsignals erreicht, was bisher bei keinem anderen Thermoelement im Hochtemperaturbereich > 1800 °C gelang.

Die Erfindung kann bei Prozessen und Anlagen mit sehr hohen Temperaturen T > 1800 °C eingesetzt werden. Zusätzlich ist ein Einsatz auch bei deutlich niedrigeren Temperaturen möglich. Vorteilhaft sind hierbei die verbesserte Messsignalstärke, ein verbessertes Signal-Rauschverhältnis und die höhere thermische Belastbarkeit gegenüber konventionellen Thermoelementen. Eine Verbesserung der Genauigkeit ist auch möglich, wenn die Messsignalstärke in einer Auswerteeinheit entsprechend genutzt wird.

Nachfolgend soll die Erfindung beispielhaft näher erläutert werden.

Dabei zeigen:
Figur 1 ein Diagramm der Phasen eines Kompositwerkstoffs, der mit Hafniumborid und Borcarbid gebildet ist, mit einem Diagramm, das den Seebeckkoeffizienten für die verschiedenen Boridanteile wider gibt;
Figur 2 ein Diagramm der Phasen eines Kompositwerkstoffs, der mit Borcarbid und Tantalcarbid gebildet ist, mit einem Diagramm, das den Seebeckkoeffizienten für die verschiedenen Boridanteile wider gibt und
Figur 3 ein Diagramm der Phasen eines Kompositwerkstoffs, der mit Borcarbid und Titanborid gebildet ist, mit einem Diagramm, das den Seebeckkoeffizienten für die verschiedenen Carbidanteile wider gibt.

### Beispiel 1: Herstellung eins TaB₂-B₄C-Komposits

Eine Pulvermischung aus TaC und B₄C wird über einen in der Keramikherstellung üblichen Misch-Mahl-Prozess in einer alkoholischen Suspension hergestellt. Dazu werden folgende Mischungen untersucht.

**Tabelle 1**

| Versatz-Bezeichnung | **Borcarbid in Masse-%** | **Tantalcarbid in Masse-%** |
|---|---|---|
| TEBC_1.1 | 90 | 10 |
| TEBC_1.2 | 80 | 20 |
| TEBC_1.3 | 70 | 30 |
| TEBC_1.4 | 60 | 40 |
| TEBC_1.5 | 50 | 50 |

Mit der Mischmahlung wird sichergestellt, dass die eingesetzten Pulver homogen miteinander vermischt sind und dass die Partikelgröße die Sinterfähigkeit der Pulver gewährleistet. Dazu sollen die Partikelgrößenverteilungsparameter der gemischten Ausgangspulver nach der Mischmahlung folgende Werte erreichen
- d90-Wert < 4 µm
- d50-Wert < 2 µm
- d10-Wert > 0,1 µm.
Dieses kann beispielsweise mit folgenden Verfahrensparametern erreicht werden:
1. Nassmahlung als Ethanolsuspension in einer Planetenkugelmühle (2h, 200 U/min)
2. Trocknung im Rotationsverdampfer
3. Siebgranulierung
Die so erhaltenen Mischpulvergranulate werden in einer FAST-Sinteranlage bei einer Temperatur von 2000 °C über 15 min gehalten. Die Aufheizgeschwindigkeit beträgt 50 K/min. Mit diesen Sinterparametern gelingt eine nahezu 100 %-ige Verdichtung von Tabletten mit einem Durchmesser von 30 mm und einer Höhe von 6 mm. Es wird eine offene Porosität von < 0,1 Vol.-% für alle in Tabelle 1 genannten Zusammensetzungen erreicht.

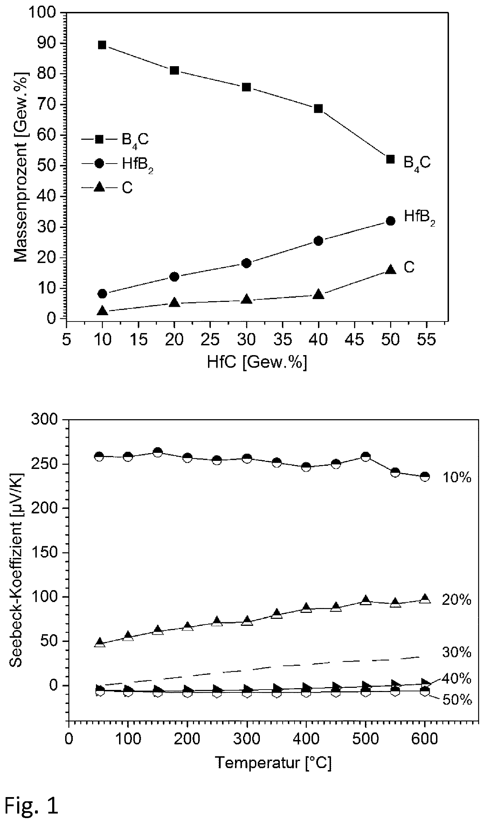

Die so hergestellten Proben stehen für Messungen des Seebeckkoeffizienten zur Verfügung. Zur Ermittlung des Seebeckkoeffizienten werden die flachen Scheiben mit den Abmessungen 10 x 5 x 0,5 mm³ hergestellt.
Die Phasenanalyse des jeweiligen Presskörpers zeigt, dass sich während der Sinterung die Umsetzung des TaC zu TaB₂ vollzogen hat. Dem Diagramm von Figur 1 kann man die Phasenzusammensetzung der verschiedenen Mischungen aus Tabelle 1 entnehmen.

Ein deutlicher Abfall des Seebeckkoeffizienten ist zwischen dem TaC-Gehalt von 10 Masse-% und 30 Masse-% erkennbar. In diesem Bereich liegt die Perkolationsgrenze des Werkstoffkomposits.

Zur Herstellung eines thermisch hochbelastbaren thermoelektrischen Elements als Temperatursensor werden deshalb die Versätze TEBC_1.1 und TEBC_1.2 zu zwei Tabletten mit verschiedenen Abmessungen verpresst. TEBC_1.1 wird als Tablette mit einem Durchmesser von 10 mm hergestellt und TEBC_1.2 als Tablette mit einem Durchmesser von 5 mm. Dieses gelingt durch den Einsatz eines konventionellen Trockenpressverfahrens und anschließender sogenannter Grünbearbeitung der ungesinterten Presskörper. TEBC_1.1 wird durch eine Bohrung mit dem Durchmesser 5 mm zu einem Ring als erster Bereich geformt in dessen Mitte Presskörper als zweiter Bereich aus TEBC_1.2 passgenau eingesteckt werden kann. Beide Presskörper werden anschließend mittels FAST-Sinterung stoffschlüssig miteinander versintert. Da die Zusammensetzung und die granulometrische Charakterisitik beider Presskörper nahezu identisch sind, gelingt dieses, wie bei einer identischen Zusammensetzung des Sinterkörpers.

Der so hergestellte Sinterkörper besteht aus B₄C-C-TaB₂ in definierter Abgrenzung einer inneren Zone mit ca. 8 Masse-% TaB₂-Gehalt und einer äußeren Zone mit einer Zusammensetzung von ca. 5 Masse-% TaB₂. In einem zweiten Schritt wird ein Rohr aus dem Versatz TEBC_1.1 und ein Zylinder aus dem Versatz TEBC_1.2 in gleicher Weise hergestellt, wie der beschriebene Werkstoffverbund aus beiden Versätzen. Diese beiden den ersten und zweiten Bereich bildenden Presskörper werden auf den zuvor hergestellten Werkstoffverbund aufgesetzt und in der FAST-Sinteranlage über Diffusionsfügen bei 2000 °C stoffschlüssig miteinander verbunden. Die neu gefügten Teile haben untereinander keinen elektrischen Kontakt und können damit als Messleitung zur Aufnahme des Sensorsignals genutzt werden.

Damit kann dieses so erhaltene thermoelektrische Element als Temperatursensor genutzt werden. In einem Test zur Messung des Messsignals aufgrund der Erzeugung einer thermoelektrischen Spannung wurde eine Seite des Sensors erwärmt, die andere Seite des Sensors gekühlt. Mittels an die unterschiedlichen Bereiche angeschlossenen Messdrähten kann die elektrische Spannung mit einem geeigneten Messgerät ermittelt werden. Dabei steigt die elektrische Messspannung mit einer Temperaturerhöhung auf der heißen Seite und einer Temperatur von 25°C auf der gekühlten Seite von 0 mV (bei einer Temperaturdifferenz von 0 K) auf 42 mV bei einer Temperaturdifferenz von 300 K an. Dieses entspricht exakt den Erwartungen aus den Voruntersuchungen.

Nach einer Auslagerung des thermoelektrischen Elements bei 2200 °C unter Argon über 2 h wurde der oben beschriebene Test zur Ermittlung der thermoelektrischen Spannungsdifferenz wiederholt. Der Verlauf der Messsignalkurve entspricht genau dem der ersten Messung. Eine weitere Auslagerung über 100 h unter den genannten Bedingungen führt wieder zu einer genauen Reproduktion der zuerst ermittelten Messsignalkurve.

Mit diesem Versuch konnte die hohe thermische Stabilität des hergestellten thermoelektrischen Elements nachgewiesen werden.

### Beispiel 2. Herstellung eines HfB₂-B₄C -Kompositwerkstoffs

Eine Pulvermischung aus HfC und B₄C wird über einen in der Keramikherstellung üblichen Misch-Mahl-Prozess in einer alkoholischen Suspension hergestellt. Dazu werden folgende Mischungen untersucht.

**Tabelle 2**

| Versatz-Bezeichnung | **Borcarbid in Masse-%** | **Hafniumcarbid in Masse-%** |
|---|---|---|
| TEBC_2.1 | 90 | 10 |
| TEBC_2.2 | 80 | 20 |
| TEBC_2.3 | 70 | 30 |
| TEBC_2.4 | 60 | 40 |
| TEBC_2.5 | 50 | 50 |

Mit der Mischmahlung wird sichergestellt, dass die eingesetzten Pulver homogen miteinander vermischt sind und dass die Partikelgröße die Sinterfähigkeit der Pulver gewährleistet. Dazu sollen die Partikelgrößenverteilungsparameter der gemischten Ausgangspulver nach der Mischmahlung folgende Werte erreichen:
- d₉₀-Wert < 4 µm
- d₅₀-Wert < 2 µm
- d₁₀-Wert > 0,1 µm.
Dieses kann beispielsweise mit folgenden Verfahrensparametern erreicht werden:
1. Nassmahlung als eine Ethanolsuspension in einer Planetenkugelmühle (2h, 200 U/min)
2. Trocknung im Rotationsverdampfer
3. Siebgranulierung
Die so erhaltenen Mischpulvergranulate werden in einer FAST-Sinteranlage (field assisted sintering, spark plasma sintering - SPS) bei einer Temperatur von 2000 °C über 15 min gehalten. Die Aufheizgeschwindigkeit beträgt 50 K/min. Mit diesen Sinterparametern gelingt eine nahezu 100 %-ige Verdichtung von Tabletten als Presskörpern mit einem Durchmesser von 30 mm und einer Höhe von 8 mm. Es wird eine offene Porosität von < 0,3 Vol.-% für alle in Tab. 2 enthaltenen Zusammensetzungen erreicht.

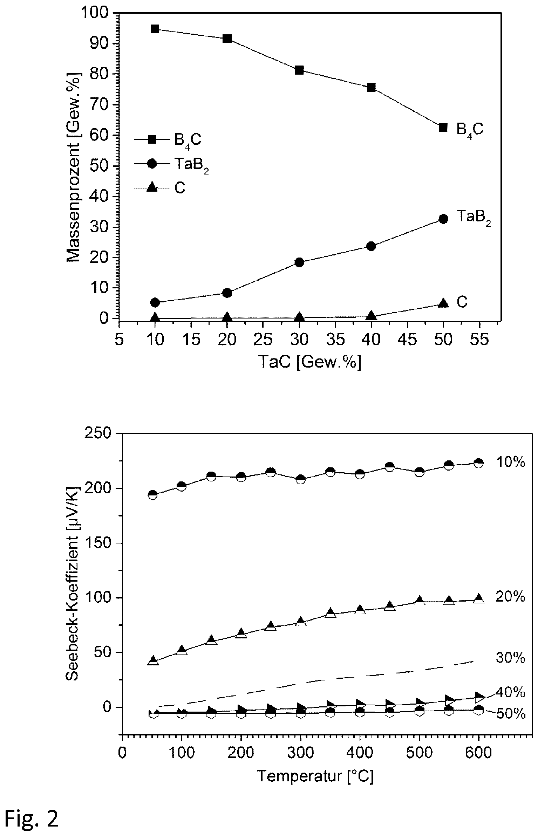

Die so hergestellten Proben stehen für Messungen des Seebeckkoeffizienten zur Verfügung. Zur Ermittlung des Seebeckkoeffizienten werden die flachen Scheiben mit den Abmessungen 10 x 5 x 0,5 mm³ hergestellt.
Die Phasenanalyse des Probekörpers zeigt, dass sich während der Sinterung die Umsetzung des HfC zu HfB₂ vollzogen hat. Dem in Figur 2 gezeigten Diagramm kann man die Phasenzusammensetzung der verschiedenen Mischungen aus Tabelle 2 entnehmen.

Ein deutlicher Abfall des Seebeckkoeffizienten ist zwischen dem HfC-Gehalt von 10 Masse-% und 30 Masse-% erkennbar. In diesem Bereich liegt die Perkolationsgrenze des Kompostwerkstoffs.

Zur Herstellung eines thermisch hochbelastbaren Sensors werden deshalb die Versätze TEBC_2.1 und TEBC_2.2 zu zwei Tabletten mit verschiedenen Abmessungen verpresst. TEBC_2.1 wird als Tablette mit einem Durchmesser von 10 mm hergestellt und TEBC_2.2 als Tablette mit einem Durchmesser von 5 mm. Dieses gelingt durch den Einsatz eines konventionellen Trockenpressverfahrens und anschließender sogenannter Grünbearbeitung den ungesinterten Presskörpern. TEBC_2.1 wird durch eine Bohrung mit dem Durchmesser 5 mm zu einem Ring geformt in dessen Mitte Presskörper TEBC_2.2 passgenau eingesteckt werden kann. Beide Presskörper als Bereiche eines thermoelektrischen Elements werden anschließend mittels FAST-Sinterung stoffschlüssig miteinander versintert. Da die Zusammensetzung und die granulometrische Charakterisitik beider Presskörper nahezu identisch sind, gelingt dieses, wie bei einer identischen Zusammensetzung des Sinterkörpers.

Der so hergestellte Sinterkörper besteht aus B₄C-C-HfB₂ in definierter Abgrenzung einer inneren Zone als erstem Bereich mit ca. 14 Masse-% HfB₂-Gehalt und einer äußeren Zone als zweitem Bereich mit einer Zusammensetzung von ca. 8 Masse-% HfB₂. In einem zweiten Schritt wird ein Rohr aus dem Versatz TEBC_2.1 und ein Zylinder aus dem Versatz TEBC_2.2 in gleicher Weise hergestellt, wie der beschriebene Werkstoffverbund aus beiden Versätzen. Diese beiden Komponenten werden auf den zuvor hergestellten Werkstoffverbund aufgesetzt und in der FAST-Sinteranlage über Diffusionsfügen bei 2000 °C stoffschlüssig miteinander verbunden. Die neu gefügten Teile haben untereinander keinen elektrischen Kontakt und können damit als Messleitung zur Aufnahme des Sensorsignals für die elektrische Spannungsdifferenz genutzt werden.

Damit kann dieser Werkstoffverbund als potenzieller Sensor genutzt werden. In einem Test zur Messung des Messsignals aufgrund der Erzeugung einer thermoelektrischen Spannung wurde eine Seite des thermoelektrischen Elements als Temperatursensor erwärmt, die andere Seite des Sensors gekühlt. Mittels Messdrähten kann die elektrische Spannung ermittelt werden. Dabei steigt die elektrische Messspannung mit einer Temperaturerhöhung auf der heißen Seite und einer Temperatur von 25°C auf der gekühlten Seite von 0 mV (bei einer Temperaturdifferenz von 0 K) auf 56 mV bei einer Temperaturdifferenz von 300 K an. Dieses entspricht exakt den Erwartungen aus den Voruntersuchungen.

Nach einer Auslagerung des thermoelektrischen Elements bei 2200 °C unter Argon über 2 h wird der oben beschriebene Test zur Ermittlung der thermoelektrischen Spannungsdifferenz wiederholt. Der Verlauf der Messkurve entspricht genau dem der ersten Messung. Eine weitere Auslagerung über 100 h unter den genannten Bedingungen führt wieder zu einer genauen Reproduktion der zuerst ermittelten Messkurve.

Mit diesem Versuch konnte die hohe thermische Stabilität des hergestellten thermoelektrischen Elements nachgewiesen werden.

### Beispiel 3. Herstellung eines HfB₂-B₄C-Kompositwerkstoffs

Eine Pulvermischung aus HfB₂ und B₄C wird über einen in der Keramikherstellung üblichen Misch-Mahl-Prozess in einer alkoholischen Suspension hergestellt. Dazu werden folgende Mischungen untersucht.

**Tabelle 3**

| Versatz-Bezeichnung | **Borcarbid in Masse-%** | **Hafniumdiborid in Masse-%** |
|---|---|---|
| TEBC_3.1 | 92 | 8 |
| TEBC_3.2 | 88 | 12 |
| TEBC_3.3 | 84 | 16 |
| TEBC_3.4 | 80 | 20 |
| TEBC_3.5 | 70 | 30 |

Mit der Mischmahlung wird sichergestellt, dass die eingesetzten Pulver homogen miteinander vermischt sind und dass die Partikelgröße die Sinterfähigkeit der Pulver gewährleistet. Dazu sollen die Partikelgrößenverteilungsparameter der gemischten Ausgangspulver nach der Mischmahlung folgende Werte erreichen:
- d₉₀-Wert < 4 µm
- d₅₀-Wert < 2 µm
- d₁₀-Wert > 0,1 µm.
Dieses kann beispielsweise mit folgenden Verfahrensparametern erreicht werden:
4. Nassmahlung als eine Ethanolsuspension in einer Planetenkugelmühle (2h, 200 U/min)
5. Trocknung im Rotationsverdampfer
6. Siebgranulierung
Die so erhaltenen Mischpulvergranulate werden in einer FAST-Sinteranlage (field assisted sintering, spark plasma sintering - SPS) bei einer Temperatur von 2000 °C über 15 min gehalten. Die Aufheizgeschwindigkeit beträgt 50 K/min. Mit diesen Sinterparametern gelingt eine nahezu 100 %-ige Verdichtung von Tabletten als Presskörpern mit einem Durchmesser von 30 mm und einer Höhe von 8 mm. Es wird eine offene Porosität von < 0,8 Vol.-% für alle in Tab. 3 enthaltenen Zusammensetzungen erreicht.

Die so hergestellten Proben stehen für Messungen des Seebeckkoeffizienten zur Verfügung. Zur Ermittlung des Seebeckkoeffizienten werden die flachen Scheiben mit den Abmessungen 10 x 5 x 0,5 mm³ hergestellt.
Die Phasenzusammensetzung der verschiedenen Mischungen entspricht dem jeweiligen thermodynamischen Gleichgewicht.

Die Perkolationsgrenze des Kompostwerkstoffs liegt bei etwa 15 Masse% HfB2.

Zur Herstellung eines thermisch hochbelastbaren Sensors werden deshalb die Versätze TEBC_3.1 und TEBC_3.2 zu zwei Tabletten mit verschiedenen Abmessungen verpresst. TEBC_3.1 wird als Tablette mit einem Durchmesser von 10 mm hergestellt und TEBC_3.2 als Tablette mit einem Durchmesser von 5 mm. Dieses gelingt durch den Einsatz eines konventionellen Trockenpressverfahrens und anschließender sogenannter Grünbearbeitung den ungesinterten Presskörpern. TEBC_3.1 wird durch eine Bohrung mit dem Durchmesser 5 mm zu einem Ring geformt in dessen Mitte Presskörper TEBC_3.2 passgenau eingesteckt werden kann. Beide Presskörper als Bereiche eines thermoelektrischen Elements werden anschließend mittels FAST-Sinterung stoffschlüssig miteinander versintert. Da die Zusammensetzung und die granulometrische Charakterisitik beider Presskörper nahezu identisch sind, gelingt dieses, wie bei einer identischen Zusammensetzung des Sinterkörpers.

Der so hergestellte Sinterkörper besteht aus B₄C-C-HfB₂ in definierter Abgrenzung einer inneren Zone als erstem Bereich mit ca. 16 Masse-% HfB₂-Gehalt und einer äußeren Zone als zweitem Bereich mit einer Zusammensetzung von ca. 12 Masse-% HfB₂. In einem zweiten Schritt wird ein Rohr aus dem Versatz TEBC_3.1 und ein Zylinder aus dem Versatz TEBC_3.2 in gleicher Weise hergestellt, wie der beschriebene Werkstoffverbund aus beiden Versätzen. Diese beiden Komponenten werden auf den zuvor hergestellten Werkstoffverbund aufgesetzt und in der FAST-Sinteranlage über Diffusionsfügen bei 2000 °C stoffschlüssig miteinander verbunden. Die neu gefügten Teile haben untereinander keinen elektrischen Kontakt und können damit als Messleitung zur Aufnahme des Sensorsignals für die elektrische Spannungsdifferenz genutzt werden.

Damit kann dieser Werkstoffverbund als potenzieller Sensor genutzt werden. In einem Test zur Messung des Messsignals aufgrund der Erzeugung einer thermoelektrischen Spannung wurde eine Seite des thermoelektrischen Elements als Temperatursensor erwärmt, die andere Seite des Sensors gekühlt. Mittels Messdrähten kann die elektrische Spannung ermittelt werden. Dabei steigt die elektrische Messspannung mit einer Temperaturerhöhung auf der heißen Seite und einer Temperatur von 25°C auf der gekühlten Seite von 0 mV (bei einer Temperaturdifferenz von 0 K) auf 52 mV bei einer Temperaturdifferenz von 300 K an. Dieses entspricht den Erwartungen aus den Voruntersuchungen.

Nach einer Auslagerung des thermoelektrischen Elements bei 2200 °C unter Argon über 2 h wird der oben beschriebene Test zur Ermittlung der thermoelektrischen Spannungsdifferenz wiederholt. Der Verlauf der Messkurve entspricht genau dem der ersten Messung. Eine weitere Auslagerung über 100 h unter den genannten Bedingungen führt wieder zu einer genauen Reproduktion der zuerst ermittelten Messkurve.

Auch mit diesem Versuch konnte die hohe thermische Stabilität des hergestellten thermoelektrischen Elements nachgewiesen werden.

### Beispiel 4 Herstellung eins TiB₂-B₄C-Komposits

Eine Pulvermischung aus TiC und B₄C wird über einen in der Keramikherstellung üblichen Misch-Mahl-Prozess in einer alkoholischen Suspension hergestellt. Dazu werden folgende Mischungen untersucht.

**Tabelle 4**

| Versatz-Bezeichnung | **Borcarbid in Masse%** | **Titancarbid in Masse%** |
|---|---|---|
| TEBC_3.1 | 90 | 10 |
| TEBC_3.2 | 80 | 20 |
| TEBC_3.3 | 70 | 30 |
| TEBC_3.4 | 60 | 40 |

Mit der Mischmahlung wird sichergestellt, dass die eingesetzten Pulver homogen miteinander vermischt sind und dass die Partikelgröße die Sinterfähigkeit der Pulver gewährleistet. Dazu sollen die Partikelgrößenverteilungsparameter der gemischten Ausgangspulver nach der Mischmahlung folgende Werte erreichen
- d₉₀-Wert < 4 µm
- d₅₀-Wert < 2 µm
- d₁₀-Wert soll > 0,1 µm.
Dieses kann beispielsweise mit folgenden Verfahrensparametern erreicht werden:
1. Trockenmischen im Taumelmischer der Pulver über 2 Stunden
2. Anschließende Nassmahlung als Ethanolsuspension in einer Planetenkugelmühle
3. Trocknung im Rotationsverdampfer
4. Siebgranulierung
Die so erhaltenen Mischpulvergranulate werden in einer FAST-Sinteranlage bei einer Temperatur von 2000 °C über 15 min gehalten. Die Aufheizgeschwindigkeit beträgt 50 K/min. Mit diesen Sinterparametern gelingt eine nahezu 100 %-ige Verdichtung von Tabletten mit einem Durchmesser von 30 mm und einer Höhe von 6 mm. Es wird eine offene Porosität von < 0,3 Vol.-% für alle in Tab. 4 gezeigten Zusammensetzungen erreicht.

Die so hergestellten Proben stehen für Messungen des Seebeckkoeffizienten zur Verfügung. Zur Ermittlung des Seebeckkoeffizienten werden flachen Scheiben mit den Abmessungen 10 x 5 x 0,5 mm hergestellt.

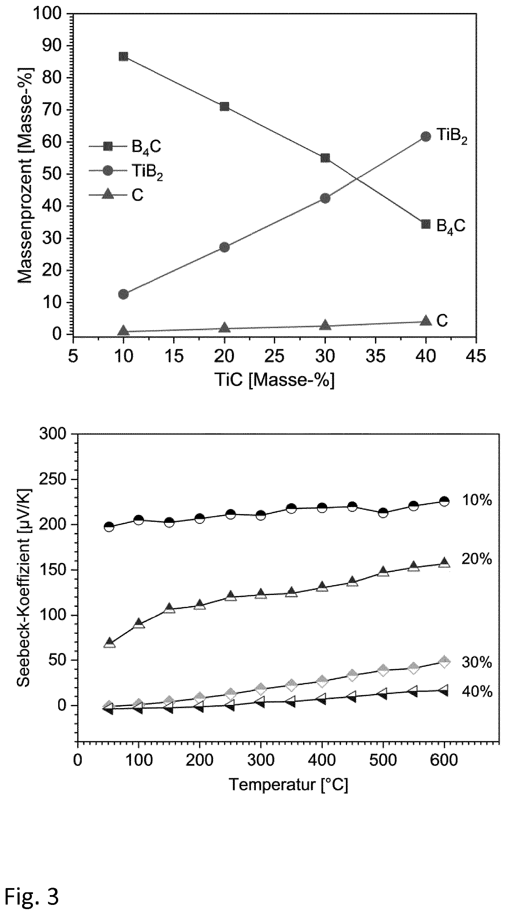

Die Phasenanalyse des Probekörpers zeigt, dass sich während der Sinterung die Umsetzung des TiC zu TiB₂ vollzogen hat. Figur 3 zeigt die Phasenzusammensetzung der verschiedenen Mischungen aus Tabelle 4.

Diese Probekörper werden hinsichtlich des resultierenden Seebecckoeffizienten vermessen die Messergebnisse sind in Figur 3 dargestellt:
Ein deutlicher Abfall des Seebeckkoeffizienten ist zwischen dem TiC-Gehalt von und 20 Masse-% erkennbar. In diesem Bereich liegt die Perkolationsgrenze des Stoffsystems.

Zur Herstellung eines thermisch hochbelastbaren Sensors werden deshalb die Versätze TEBC_3.1 und TEBC_3.2 zu zwei Tabletten mit verschiedenen Abmessungen verpresst. TEBC_3.1 wird als Tablette mit einem Durchmesser von 10 mm hergestellt und TEBC_3.2 als Tablette mit einem Durchmesser von 5 mm. Dieses kann durch den Einsatz eines konventionellen Trockenpressverfahrens und anschließender sogenannter Grünbearbeitung der ungesinterten Presskörper erreicht werden. TEBC_3.1 wird durch eine Bohrung mit dem Durchmesser 5 mm zu einem Ring geformt in dessen Mitte ein Presskörper TEBC_3.2 passgenau eingesteckt werden kann. Beide Presskörper werden anschließend mittels FAST-Sinterung stoffschlüssig miteinander versintert. Da die Zusammensetzung und die granulometrische Charakterisitik beider Presskörper nahezu identisch sind, gelingt dieses wie bei einer identischen Zusammensetzung des Sinterkörpers.

Der so hergestellte Sinterkörper besteht aus B₄C-C-TiB₂ in definierter Abgrenzung einer inneren Zone mit ca. 25 Masse-% TiB₂-Gehalt und einer äußeren Zone mit einer Zusammensetzung von ca. 14 Masse-% TiB₂.

Damit kann dieser Werkstoffverbund als potenzieller Sensor genutzt werden. In einem Test zur Messung des Messsignals aufgrund der Erzeugung einer thermoelektrischen Spannung wurde eine Seite des Sensors erwärmt, die andere Seite des Sensors gekühlt. Mittels Messdrähten kann die elektrische Spannung ermittelt werden. Dabei steigt die elektrische Messspannung mit einer Temperaturerhöhung auf der heißen Seite und einer Temperatur von 25°C auf der gekühlten Seite von 0 mV (bei einer Temperaturdifferenz von 0 K) auf 50 mV bei einer Temperaturdifferenz von 300 K an. Dieses entspricht exakt den Erwartungen aus den Voruntersuchungen.

Nach einer Auslagerung der Sensorkomponente bei 2200 °C unter Argon über 2 h wird der oben beschriebene Test zur Ermittlung der thermoelektrischen Spannungsdifferenz wiederholt. Der Verlauf der Messkurve entspricht genau dem der ersten Messung. Eine weitere Auslagerung über 100 h unter den genannten Bedingungen führt wieder zu einer genauen Reproduktion der zuerst ermittelten Messkurve.

Mit diesem Versuch konnte die hohe thermische Stabilität des hergestellten Thermoelements nachgewiesen werden.

## Patentansprüche

1. Keramisches Thermoelement mit zwei aus jeweils einer unterschiedlichen Werkstoffzusammensetzung gebildeten ersten und zweiten Bereichen oder Thermoschenkeln, die elektrisch miteinander verbunden und an ein Messgerät, das zur Messung der elektrischen Spannungsdifferenz, die infolge des Seebeck-Effektes hervorgerufen ist, ausgebildet ist, anschließbar sind, und
die beiden Bereiche oder Thermoschenkel jeweils aus einem Borcarbid-Metallcarbid- oder Borcarbid-Metallborid-Kompositwerktstoff gebildet sind, wobei
sich jeweils die Anteile an Borcarbid und Metallcarbid oder Metallborid im jeweiligen Kompositwerkstoff in den Bereichen oder Thermoschenkeln unterscheiden, **dadurch gekennzeichnet, dass** dabei das Metallcarbid oder Metallborid in mindestens einem Bereich oder Thermoschenkel mit einem Anteil im Kompositwerkstoff enthalten ist, der maximal um 20 Masse-% kleiner ist als der Anteil bei dem Perkolation des Metallcarbids bzw. Metallborids erreichbar ist.

2. Thermoelement nach Anspruch 1, wobei ein ein Carbid oder Borid bildendes Metall ausgewählt ist aus Hafnium, Tantal, Titan, Wolfram, Zirkonium, Niobium, Molybdän, Vanadium, Silicium, Bor und Chrom.

3. Thermoelement nach einem der vorhergehenden Ansprüche, wobei ein für die Ausbildung eines ersten oder zweiten Bereichs oder Thermoschenkels eingesetzter Kompositwerkstoff zu mindestens 90 Masse-% aus Carbiden, Metallboriden und Carboboriden gebildet ist und maximal 10 Masse% elementaren chemisch ungebundenen Kohlenstoff, andere Verbindungen außer Carbiden, Boriden bzw. Carboboriden oder elementare chemisch ungebundene Metalle bzw. Metalllegierungen enthält.

4. Thermoelement nach einem der vorhergehenden Ansprüche, wobei sich die Masseanteile eines im ersten und im zweiten Bereich oder Thermoschenkel enthaltenen Carbides oder Metallcarbides im jeweiligen Kompositwerkstoff um maximal 20 Masse-% voneinander unterscheiden.

5. Thermoelement nach einem der vorhergehenden Ansprüche, wobei die elektrisch leitende Verbindung zwischen den zwei Bereichen oder Thermoschenkeln mit einer direkten stoffschlüssigen Verbindung der Werkstoffe, mit denen die Bereiche oder Thermoschenkel gebildet sind, gebildet ist.

6. Verfahren zur Herstellung eines Thermoelements nach einem der vorhergehenden Ansprüche, dadurch wobei zur Ausbildung eines ersten Bereichs oder eines Thermoschenkels ein Pulvergemisch bestehend aus Borcarbid und einem weiteren Metallcarbid oder einem Borcarbid und einem Metallborid mit vorgegebenen Anteilen der zwei den jeweiligen Kompositwerkstoff bildenden chemischen Verbindungen
und ein zweiter Bereich oder Thermoschenkel ein Pulvergemisch bestehend aus Borcarbid und einem weiteren Metallcarbid oder
einem Borcarbid und einem Metallborid mit vorgegebenen und von den für die Ausbildung des ersten Bereichs oder Thermoschenkels abweichenden Anteilen der zwei den jeweiligen Kompositwerkstoff bildenden chemischen Verbindungen
bei einer thermischen Behandlung gesintert und in einem Verbindungsbereich elektrisch leitend miteinander verbunden werden.

7. Verfahren nach dem vorhergehenden Anspruch, wobei der jeweilige Kompositwerkstoff mit dem ein erster oder zweiter Bereich oder Thermoschenkel ausgebildet wird, durch gemeinsames Mahlen von Borcarbid mit einem weiteren Metallcarbid oder einem Metallborid vor einem
anschließendem Auftrag auf ein Substrat oder einer Formgebung mit nachfolgender thermischer Behandlung erhalten wird.

8. Verfahren nach dem vorhergehenden Anspruch, wobei bei der thermischen Behandlung eine chemische Umwandlung eines Metallcarbids in ein entsprechendes Metallborid oder Metallcarboborid erreicht wird und das gebildete Metallborid oder. Metallcarboborid Bestandteil eines Werkstoffkomposits wird.

9. Verfahren nach einem der zwei vorhergehenden Ansprüche, wobei mit dem Mahlen eine vorgegebene Partikelgrößenverteilung des jeweiligen gemahlenen Kompositwerkstoffs erhalten wird.

## Claims

1. Ceramic thermoelement having two first and second regions or thermolegs which are each formed from a different material composition, are connected to each other electrically and can be connected to a measuring device which is configured for measuring the electrical voltage difference, which is caused as a result of the Seebeck effect, and
the two regions or thermolegs are formed respectively from a boron carbide-metal carbide or boron carbide-metal boride composite material, wherein
the proportions of boron carbide and metal carbide or metal boride in the respective composite material differ in the regions or thermolegs, **characterised in that** the metal carbide or metal boride is thereby contained in at least one region or thermoleg with a proportion in the composite material which is by max. 20% by mass less than the proportion achievable during percolation of the metal carbide or metal boride.

2. Thermoelement according to claim 1, wherein a metal forming a carbide or boride is selected from hafnium, tantalum, titanium, tungsten, zirconium, niobium, molybdenum, vanadium, silicon, boron and chromium.

3. Thermoelement according to one of the preceding claims, wherein a composite material which is used for the formation of a first or second region or thermoleg is formed to at least 90% by mass of carbides, metal borides and carboborides and comprises max. 10% by mass of elementary chemically unbonded carbon, other compounds apart from carbides, borides or carboborides or elementary chemically unbonded metals or metal alloys.

4. Thermoelement according to one of the preceding claims, wherein the mass proportions of a carbide or metal carbide contained in the first and in the second region or thermoleg in the respective composite material are differing from each other by max. 20% by mass.

5. Thermoelement according to one of the preceding claims, wherein the electrically conductive connection between the two regions or thermolegs being formed with a direct integral connection of the materials with which the regions or thermolegs are formed.

6. Method for the production of a thermoelement according to one of the preceding claims, wherein for formation of a first region or of a thermoleg, a powder mixture consisting of boron carbide and a further metal carbide or a boron carbide and a metal boride with prescribed proportions of the two chemical compounds forming the respective composite material, and a second region or thermoleg, a powder mixture consisting of boron carbide and a further metal carbide or a boron carbide and a metal boride with proportions, which are prescribed and deviate from those for the formation of the first region or thermoleg, of the two chemical compounds forming the respective composite material are sintered in a thermal treatment and connected together electrically conductively in a connection region.

7. Method according to the preceding claim, wherein the respective composite material with which a first or second region or thermoleg is formed is obtained by common grinding of boron carbide with a further metal carbide or a metal boride before a subsequent application on a substrate or shaping, with subsequent thermal treatment.

8. Method according to the preceding claim, wherein during the thermal treatment a chemical conversion of a metal carbide into a corresponding metal boride or metal carboboride is achieved, and the formed metal boride or metal carboboride becomes a component of a composite material.

9. Method according to one of the two preceding claims, wherein a prescribed particle size distribution of the respective ground composite material is obtained with the grinding.

## Revendications

1. Thermocouple en céramique avec deux zones, une première et une seconde, respectivement formées à base d'une composition de matière différente, ou pattes thermiques, qui sont reliées l'une à l'autre électriquement et qui peuvent être reliées à un appareil de mesure, qui est conçu pour la mesure de la différence de tension électrique qui est induite du fait de l'effet Seebeck, et
les deux zones ou pattes thermiques sont formées respectivement à base d'un matériau composite de carbure de bore et de carbure métallique ou de carbure de bore et de borure métallique, où
respectivement, les proportions en carbure de bore et en carbure métallique ou en borure métallique dans le matériau composite respectif se différentient dans les zones ou les pattes thermiques, **caractérisé en ce qu'**ainsi le carbure métallique ou le borure métallique est contenu dans au moins une zone ou une patte thermique avec une proportion dans le matériau composite, qui est au maximum inférieure de 20 % en masse à la proportion où une percolation du carbure métallique, respectivement du borure métallique, peut être atteinte.

2. Thermocouple selon la revendication 1, dans lequel
un métal formant un carbure ou un borure est choisi parmi le hafnium, le tantale, le titane, le tungstène, le zirconium, le niobium, le molybdène, le vanadium, le silicium, le bore et le chrome.

3. Thermocouple selon l'une des revendications précédentes, dans lequel un matériau composite employé pour la formation d'une première ou d'une seconde zone ou patte thermique est constitué d'au moins 90 % en masse de carbures de borures métalliques et de carboborures et au maximum de 10 % en masse de carbone chimiquement élémentaire non lié, contient d'autres composés à part les carbures, les borures, respectivement, les carboborures ou des métaux non liés chimiquement élémentaires, respectivement alliages métalliques.

4. Thermocouple selon l'une des revendications précédentes, dans lequel les proportions en masses d'un carbure ou d'un carbure métallique contenues dans la première et dans la seconde zone ou patte thermique se différentient l'une de l'autres dans le matériau composite respectif au maximum de 20 % en masse.

5. Thermocouple selon l'une des revendications précédentes, dans lequel la liaison conductrice électriquement entre les deux zones ou pattes thermiques est formée avec une liaison directe par complémentarité des matières des matériaux avec lesquels les zones ou pattes thermiques sont formées.

6. Procédé de fabrication d'un thermocouple selon l'une des revendications précédentes, dans lequel, pour la formation d'une première zone ou d'une patte thermique, un mélange pulvérulent constitué de carbure de bore et d'un autre carbure métallique ou de carbure de bore et d'un borure métallique avec des proportions prédéfinies des deux composés chimiques formant le matériau composite respectif, et d'une seconde zone ou patte thermique, un mélange pulvérulent constitué de carbure de bore et d'un autre carbure métallique ou de carbure de bore et d'un borure métallique avec des proportions prédéfinies et différentes de celles pour la formation de la première zone ou patte thermique des deux composés chimiques formant le matériau composite respectif, sont frittés lors d'un traitement thermique et sont reliés l'un à l'autre de manière électriquement conductrice dans une zone de liaison.

7. Procédé selon la revendication précédente, dans lequel le matériau composite respectif est formé avec une première ou une seconde zone ou patte thermique, est obtenu par une mouture conjointe de carbure de bore avec un autre carbure métallique ou un borure métallique avant un dépôt ultérieur sur un substrat ou un façonnage après un traitement thermique postérieur.

8. Procédé selon la revendication précédente, dans lequel, lors du traitement thermique, une transformation chimique d'un carbure métallique en un borure métallique ou un carboborure métallique correspondant est réalisée et le borure métallique ou le carboborure métallique devient un composant d'un composite de matières.

9. Procédé selon l'une des deux revendications précédentes, dans lequel une distribution de tailles particulaires prédéfinie du matériau composite moulu respectif est obtenue avec la mouture.
